**Europäisches Patentamt**

**European Patent Office**

**Office européen des brevets**

(19)

(11) Veröffentlichungsnummer: **0 242 756**

**A2**

(12) **EUROPÄISCHE PATENTANMELDUNG**

(21) Anmeldenummer: **87105428.4**

(22) Anmeldetag: **11.04.87**

(51) Int. Cl.³: **B 60 B 33/00**

(30) Priorität: **18.04.86 DE 3613136**

(43) Veröffentlichungstag der Anmeldung:
**28.10.87 Patentblatt 87/44**

(84) Benannte Vertragsstaaten:
**FR GB IT**

(71) Anmelder: **Albert Schulte Söhne GmbH. & Co.**
**Remscheider Strasse 25**
**D-5632 Wermelskirchen(DE)**

(72) Erfinder: **Schulte, Arnolf, Dipl.-Ing.**
**Friedenstrasse 8c**
**D-5632 Wermelskirchen 1(DE)**

(74) Vertreter: **Buse, Karl Georg, Dipl.-Phys. et al,**
**Patentanwälte Dipl.-Phys. Buse Dipl.-Phys. Mentzel**
**Dipl.-Ing. Ludewig Unterdörnen 114 Postfach 20 02 10**
**D-5600 Wuppertal 2(DE)**

(54) **Laufrolle für Transportwagen.**

(57) Die Laufrolle weist zwei die Achse eines Laufrades lagernde, über eine Wandbrücke miteinander verbundene Gabelschenkel auf. Diese Gabelschenkel sind an einem separaten Gabelkopf befestigt, der aus zwei sich ergänzenden Kopfstücken gebildet ist. Dieser Gabelkopf umgreift einen Befestigungszapfen mit einer beim Zusammensetzen der Kopfstücke gebildeten Lageraufnahme. Zur fertigungstechnischen und montagetechnischen Vereinfachung ist der Befestigungszapfen fester Bestandteil des Transportwagens, auf den die Laufrolle aufsteckbar ist.

FIG. 2

EP 0 242 756 A2

PATENTANWÄLTE     0242756
zugelassene Vertreter beim Europäischen Patentamt

DIPL.-PHYS. BUSE · DIPL.-PHYS. MENTZEL · DIPL.-ING. LUDEWIG

Unterdörnen 114 · Postfach 200210 · 5600 Wuppertal 2 · Telefon (0202) 557022/23/24 · Telex 8591606 wpat · Telefax 0202/557024

37                 **5600 Wuppertal 2, den**

Kennwort: "Wagenrollenschwenkzapfen"


Albert Schulte Söhne GmbH & Co.,
Remscheider Str. 25, 5632 Wermelskirchen


---

## Laufrolle für Transportwagen

---


Die Erfindung betrifft eine Laufrolle für Transportwagen, insbesondere für korbartige Einkaufswagen, mit
zwei die Achse eines Laufrades lagernden, über eine
Wandbrücke miteinander verbundenen Gabelschenkeln, die
an einem separaten Gabelkopf befestigt sind, der aus
zwei sich ergänzenden, einen Befestigungszapfen mit einer
beim Zusammensetzen gebildeten Lageraufnahme umgreifenden
Kopfstücken gebildet ist.

Bei einer bekannten Laufrolle der vorgenannten Art erfordert der aus dem Gabelkopf ausragende Befestigungszapfen eine Aufnahmeeinrichtung zur Halterung am Transportwagen, der demnach mit einer entsprechenden Aufnahmeeinrichtung auszustatten wäre. Diese Herrichtung des
Transportwagens selbst ist jedoch aufwendig und dementsprechend teuer. Es wäre aber auch denkbar, einen
Befestigungszapfen zu verwenden, wie er beispielsweise
bei der aus der DE-PS 23 33 199 bekannten Laufrolle verwendet wird. Ein derartiger Zapfen ist jedoch als
vertikale, rechteckförmige Platte in bestimmten, zwischen
zwei benachbarte Stäbe eines korbartigen Einkaufswagens
passenden Abmessungen auszubilden. Da außerdem die Mittelebene des Flansches etwa in der durch den Mittelpunkt der Laufrolle liegenden vertikalen Ebene und demnach
in der Mittelebene des Wagengitterwerkes liegen soll, ist
eine maßgenaue Fertigung des Befestigungszapfens einerseits
sowie seine exakte Verbindung mit dem Gabelkopf andererseits erforderlich. Diese Verbindung ist als werkseitiger
Preßvorgang ausgeführt und die so vorbereitete Laufrolle
ist anschließend ihrerseits mittels weiteren Befestigungsmitteln mit dem Transportwagen zu verbinden. Der Herstellungs- und Montageaufwand einer derartigen Laufrolle
ist demgemäß beträchtlich.

Die Aufgabe der Erfindung besteht darin, eine fertigungstechnisch einfache und von der Montage her leicht zu
bewerkstelligende Befestigungsmöglichkeit für eine Laufrolle der eingangs genannten Art an einem Transportwagen zu schaffen.

Diese Aufgabe ist erfindungsgemäß dadurch gelöst, daß
Der Befestigungszapfen fester Bestandteil des Transportwagens ist. Dadurch kann die Laufrolle mit ihrem Gabelkopf
einfach auf dem wagenseitigen Befestigungszapfen aufgesteckt werden. Eine besonders einfache, fertigungstechnisch
und montagemäßig herzustellende Befestigungsmöglichkeit
ergibt sich bei der Bestückung von aus Stäben zu einem
Gitterwerk zusammengesetzten Transportwagen, wie sie insbesondere in Großkaufhäusern, Supermärkten u.dgl. anzutreffen sind. Bei derartigen Transportwagen ist der
Befestigungszapfen vorzugsweise durch eine vertikal
verlaufende Verlängerung eines Gitterwerkstabes gebildet.

Um selbst dann zu gewährleisten, daß die Laufrolle ihre
Verbindungslage am Transportwagen beibehält, wenn eine
der Laufrollen ihre Bodenhaftung verloren hat, ist nach einem weiteren Ausgestaltungsmerkmal der Erfindung der
Befestigungszapfen von einem in einer Ringnut der Lageraufnahme des Gabelkopfes angeordneten Axialhaltering umschlossen. Dieser Axialhaltering mag dabei vorzugsweise von
einem den Befestigungszapfen klemmend umfassenden Spannring
gebildet sein. Es versteht sich jedoch, daß statt eines
auch mehrere Axialhalteringe in einer oder mehreren Ringnuten angeordnet sein können, wenn dies erforderlich ist.

Da für den separaten Gabelkopf ein anderer Werkstoff als
für die Gabelschenkel verwendbar ist und dies beispielsweise Gleiteigenschaften aufweisender Kunststoff sein kann,
in den der Axialhaltering infolge des geteilten Gabelkopfes
leicht eingebettet montiert sein kann, läßt sich die Lenkrolle einfach von der Unterseite des Transportwagens her
auf den diesem zugehörigen, der im allgemeinen in den vier
Eckbereichen des Transportwagens angeordneten Befestigungszapfen aufstecken.

Um bei der Benutzung von Transportwagen Beschädigungen von
Einrichtungsgegenständen zu vermeiden, weisen nach einem
weiteren Ausgestaltungsmerkmal der Erfindung die Kopfstücke
oberendig einen Lageransatz für ein Abweisrad auf. Dieses
um den Lageransatz in horizontaler Ebene drehbare Abweisrad ragt über den Gabelkopf seitlich hinaus und läßt den
Transportwagen an Hindernissen, wie Türen, Wänden od.dgl.,
seitlich abgleiten. Dabei ist der Lageransatz vorteilhaft
als Rastring ausgebildet, so daß eine einfache Montage des
Abweisrades möglich ist. Dieses Abweisrad selbst ist vorteilhaft als Tellerscheibe ausgebildet, die mit einem Hohlraum den oberen Bereich des Gabelkopfes übergreift.

Die Erfindung ist auf der Zeichnung in einem Ausführungsbeispiel dargestellt und wird nachfolgend näher erläutert.
Es zeigen:

Fig. 1    einen schematisch in einer Seitenansicht
          dargestellten Einkaufswagen mit daran
          befestigten Laufrollen,

Fig. 2    eine an einem Eckbereich des Einkaufswagens angeordnete Laufrolle in einem
          Vertikalschnitt durch deren Längsmittenebene,

Fig. 3    die aus Fig. 2 ersichtliche Laufrolle
          ohne Laufrad in einem Querschnitt nach
          der Linie III-III der Fig. 2,

Fig. 4    die aus den Fig. 2 und 3 ersichtliche
          Laufrolle in einer Draufsicht,

Fig. 5    eine erfindungsgemäße Laufrolle mit
          einer am Gabelkopf angeordneten
          Abweisrolle.

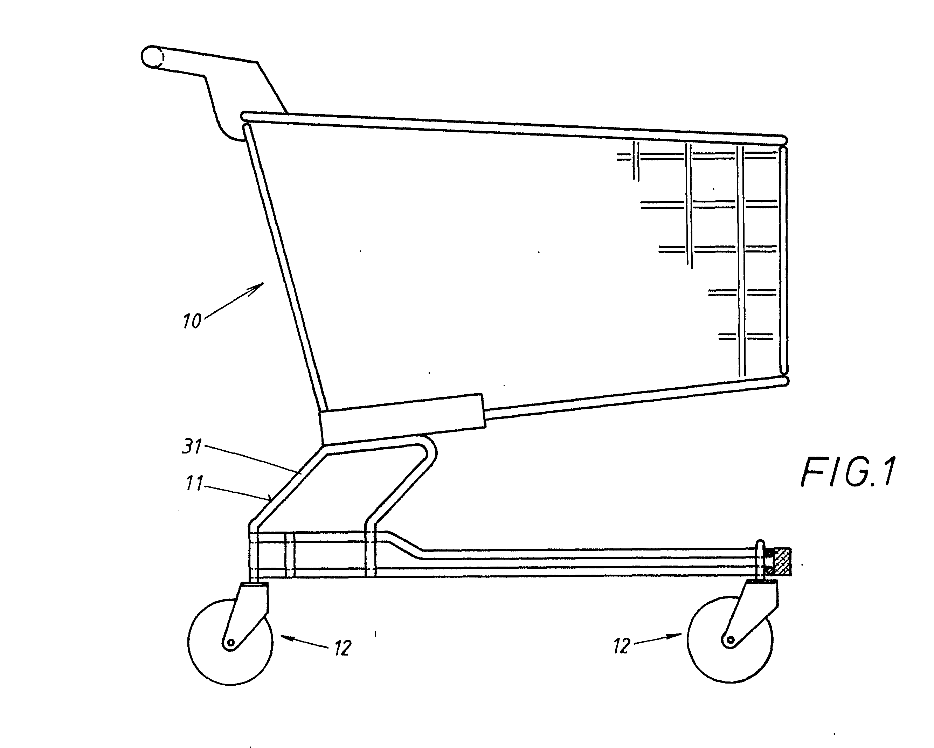

In Fig. 1 ist ein als korbartiger Einkaufswagen ausgebildeter Transportwagen 10 ersichtlich, dessen Untergestell  11 an seinen vier Eckbereichen mit jeweils
einer Laufrolle 12 ausgerüstet ist. Dabei kann jede der
vier Laufrollen eine um einen Befestigungszapfen schwenkbare Radgabel aufweisen, jedoch ist es auch möglich, auf
einer Schmalseite des Untergestelles an zwei gegenüberliegenden Eckbereichen eine Bockrolle anzuordnen, während
die andere Schmalseite des Untergestelles an ihren beiden
gegenüberliegenden Eckbereichen mit einer schwenkbaren
Laufrolle ausgestattet sein kann.

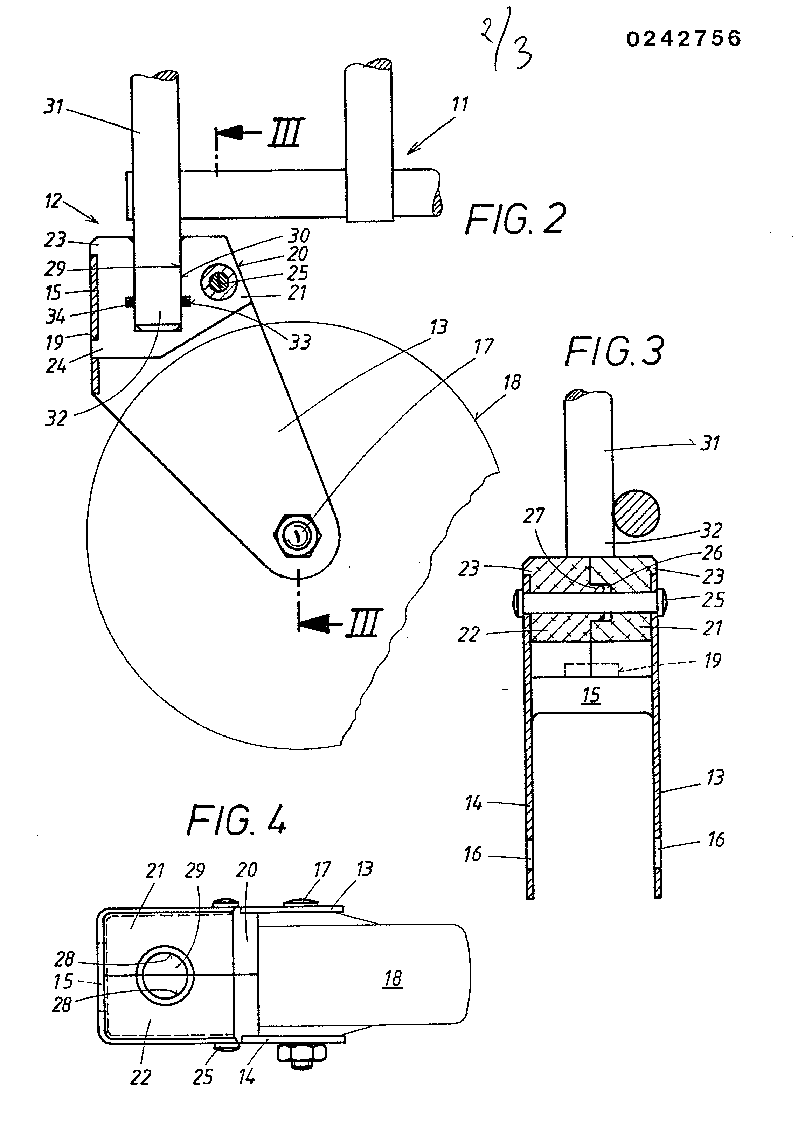

Die in Fig. 1 angedeutete und in den Fig. 2 bis 4 dargestellte Laufrolle 12 weist eine Radgabel auf, deren Gabelkörper aus einem einstückigen Blechzuschnitt gebildet ist, indem durch U-förmiges Abkanten zwei Gabelschenkel 13 und 14 über eine dazwischen einstückig angeordnete, vertikal verlaufende Wandbrücke 15 miteinander verbunden sind. Jeder Gabelschenkel 13 und 14 weist in seinem unteren freien Ende eine Lagerbohrung 16 für eine in den Fig. 2 und 4 angedeutete Achse 17 des Laufrades 18 auf, während in der Wandbrücke 15 des Gabelkörpers eine rechteckförmige Ausnehmung 19 angeordnet ist, die als Stützaufnahme für den oberseitig in den Gabelkörper eingesetzten Gabelkopf 20 dient. Dieser Gabelkopf besteht aus zwei Kopfstücken 21 und 22, die einander ergänzen und zueinander passen. Die Kopfstücke 21 und 22 weisen oberseitig Ansätze 23 auf, die im zusammengefügten Zustand der Kopfstücke 21 und 22 eine umlaufende Leiste bilden, welche die Wandbrücke 15 und die Gabelschenkel 13 und 14 oberseitig übergreift. Mit Abstand zu dem die Wandbrücke 15 übergreifenden Ansatz 23 ist an den beiden Kopfstücken 21 und 22 jeweils ein in die Ausnehmung 19 der Wandbrücke vorragender, sich zu einer Leiste ergänzender Vorsprung 24 angeordnet, der zusammen mit dem Ansatz 23 und einem die Gabelschenkel 13 und 14 sowie die Kopfstücke 21 und 22 durchquerenden Nietbolzen 25 die Lage des Gabelkopfes 20 gegenüber den Gabelschenkeln 13 und 14 in ihrer Verbindungslage sichert. Dabei mag am einen Kopfstück 21 an der dem anderen Kopfstück 22 zugekehrten Seite eine Paßaufnahme 26 eingetieft sein, in welche ein am anderen Kopfstück 22 angeordneter Paßansatz 27 schließend eingreift. In beiden Kopfstücken 21 und 22 ist eine halbzylindrische, sacklochartige Ausnehmung 28 angeordnet, die sich im zusammengefügten Zustand der Kopfstücke 21 und 22 zu einer sacklochartigen Lageraufnahme 29 für einen Befestigungszapfen 30 ergänzen.

6

Der in die Lageraufnahme 29 des Gabelkopfes 20 eingreifende Befestigungszapfen 30 ist Bestandteil des Untergestelles 11 am Transportwagen 10 und besteht bei dem aus den Fig. 2 und 3 ersichtlichen Ausführungsbeispiel aus der Verlängerung 32 eines Gitterwerkstabes 31. Auf diesen durch die Verlängerung 32 des Gitterwerkstabes gebildeten Befestigungszapfen 30 läßt sich von unten her der Gabelkopf 20 mit den daran befestigten Gabelschenkeln 13 und 14 sowie dem dazwischen auf der Achse 17 angeordneten Laufrad 18 aufschieben. Da die den Gabelkopf 20 bildenden Kopfstücke 21 und 22 aus einem gleitfähigen Kunststoff hergestellt sein können, ist die erzielte Gleitlagerung für die Schwenkbewegung der Laufrolle 12 vollkommen ausreichend. Um jedoch die Laufrolle in der auf den Befestigungszapfen 30 aufgesteckten Lage zu haltern, ist der Gabelkopf 20 in der Lageraufnahme 29 mit einer Ringnut 33 versehen, die den Aufnahmeraum für einen Axialhaltering 34 bildet. Dieser Axialhaltering kann beispielsweise als ein den Befestigungszapfen klemmend umfassender Spannring ausgebildet sein, dessen Haltekraft ausreicht, um ein Abgleiten der auf den Befestigungszapfen aufgesteckten Laufrolle zu verhindern.

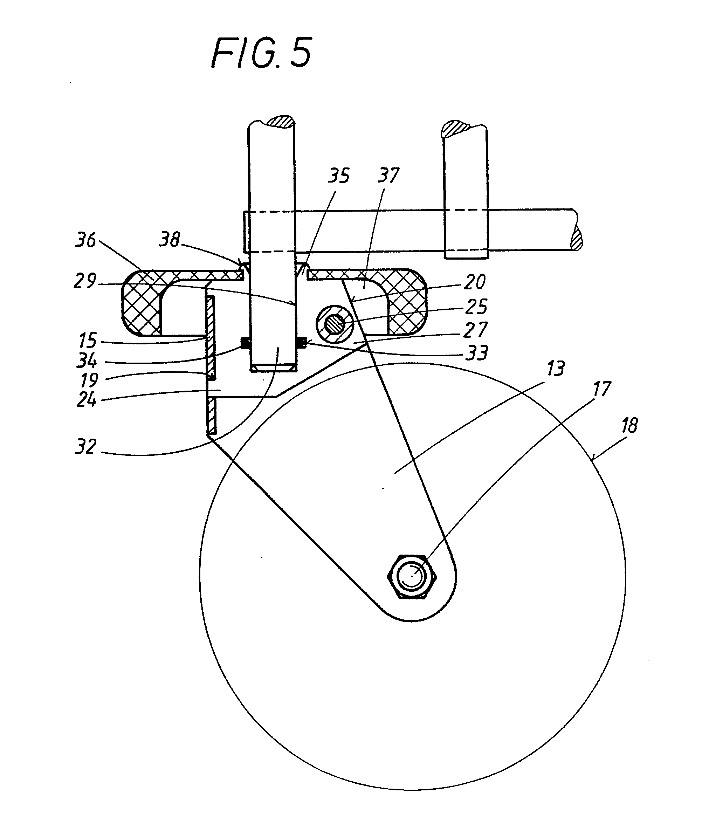

Aus Fig. 5 ist eine weitere Ausführungsform einer Laufrolle ersichtlich, die im wesentlichen mit der aus den Fig. 2 bis 4 entnehmbaren Laufrolle übereinstimmt. Allerdings weist jedes Kopfstück an seiner Oberseite einen die Ausnehmung 28 umrundenden, halbringförmigen Lageransatz 35 auf. Diese Lageransätze 35 ergänzen sich zu einem den Befestigungszapfen 30 umfassenden Lagerring, auf dem ein tellerförmiges Abweisrad 36 drehbar gelagert ist, so daß es in horizontaler Richtung im oberen Bereich der Radgabel umlaufen kann. Der Lageransatz 35 ist mit oberseitigen Rastvorsprüngen 38 versehen, so daß das Abweisrad 36 zur Anordnung am Gabelkopf 20 aufgerastet werden kann. Dabei ist die Tellerform des Abweisrades und dessen Lagerform so gewählt, daß der die Lauffläche bildende Umfangsring des Abweisrades den oberen Bereich der Radgabel umgreift, d.h. daß die Radgabel bereichsweise in den Hohlraum 37 des Abweisrades eintaucht.

Wie bereits erwähnt, gibt die dargestellte und vorbeschriebene Ausführungsform die Erfindung lediglich beispielsweise wieder, die keinesfalls allein auf dieses Ausführungsbeispiel beschränkt ist. Vielmehr sind noch mancherlei Änderungen und andere Ausgestaltungen der Erfindung denkbar. So ist es beispielsweise auch denkbar, die erfindungsgemäße Laufrolle bei solchen Transportwagen einzusetzen, die geschlossene Wand- und Bodenteile aufweisen und bei denen der Befestigungszapfen 30 als in vertikaler Richtung vorspringender Achsstummel ausgebildet ist. Ein solcher Befestigungszapfen kann beispielsweise auch in einer konsolartigen Halterung an der Unterseite des Bodens eines Transportwagens, beispielsweise durch Schrauben, Nieten, Verschweißen od.dgl., befestigt sein.

## PATENTANWÄLTE
### zugelassene Vertreter beim Europäischen Patentamt

# DIPL.-PHYS. BUSE · DIPL.-PHYS. MENTZEL · DIPL.-ING. LUDEWIG

Unterdörnen 114 · Postfach 200210 · 5600 Wuppertal 2 · Telefon (0202) 557022/23/24 · Telex 8591606 wpat · Telefax 0202/557024

0242756

5600 Wuppertal 2, den

Kennwort: "Wagenrollenschwenkzapfen"

Albert Schulte Söhne GmbH & Co.,
Remscheider Str. 25, 5632 Wermelskirchen

- 8 -

Bezugszeichenliste:

| | | | |
|---|---|---|---|
| 10 | Transportwagen | 29 | Lageraufnahme |
| 11 | Untergestell | 30 | Befestigungszapfen |
| 12 | Laufrolle | 31 | Gitterwerkstab |
| 13 | Gabelschenkel | 32 | Verlängerung, von 31 |
| 14 | Gabelschenkel | 33 | Ringnut |
| 15 | Wandbrücke | 34 | Axialhaltering |
| 16 | Lagerbohrung | 35 | Lageransatz |
| 17 | Achse | 36 | Abweisrad |
| 18 | Laufrad | 37 | Hohlraum von 36 |
| 19 | Ausnehmung | 38 | Rastvorsprung |
| 20 | Gabelkopf | | |
| 21 | Kopfstück | | |
| 22 | Kopfstück | | |
| 23 | Ansatz | | |
| 24 | Vorsprung | | |
| 25 | Nietbolzen | | |
| 26 | Paßaufnahme | | |
| 27 | Paßansatz | | |
| 28 | Ausnehmung | | |

# PATENTANWÄLTE

zugelassene Vertreter beim Europäischen Patentamt **0242756**

## · DIPL.-PHYS. BUSE · DIPL.-PHYS. MENTZEL · DIPL.-ING. LUDEWIG

Unterdörnen 114 · Postfach 200210 · 5600 Wuppertal 2 · Telefon (0202) 557022/23/24 · Telex 8591606 wpat · Telefax 0202/557024

37          5600 Wuppertal 2, den

Kennwort: "Wagenrollenschwenkzapfen"


Albert Schulte Söhne GmbH & Co.,
Remscheider Str. 25, 5632 Wermelskirchen

— \ —

---

A n s p r ü c h e :

---


1.) Laufrolle für Transportwagen, insbesondere für korbartige Einkaufswagen, mit zwei die Achse eines
Laufrades lagernden, über eine Wandbrücke miteinander
verbundenen Gabelschenkeln, die an einem separaten
Gabelkopf befestigt sind, der aus zwei sich ergänzenden, einen Befestigungszapfen mit einer beim
Zusammensetzen gebildeten Lageraufnahme umgreifenden
Kopfstücken gebildet ist,

d a d u r c h   g e k e n n z e i c h n e t ,

daß der Befestigungszapfen (30) fester Bestandteil
des Transportwagens (10) ist.

2.) Laufrolle nach Anspruch 1 für einen aus Stäben zu
einem Gitterwerk zusammengesetzten Transportwagen,
dadurch gekennzeichnet, daß der Befestigungszapfen
(30) durch eine vertikal verlaufende Verlängerung
(32) eines Gitterwerkstabes (31) gebildet ist.

3.) Laufrolle nach Anspruch 1 oder 2, dadurch gekennzeichnet,
daß der Befestigungszapfen (30) von wenigstens einem
in einer Ringnut (33) der Lageraufnahme (29) angeordneten Axialhaltering (34) umschlossen ist.

4.) Laufrolle nach Anspruch 3, dadurch gekennzeichnet,
daß der Axialhaltering (34) von einem den Befestigungszapfen (30) klemmend umfassenden Spannring gebildet
ist.

5.) Laufrolle nach einem oder mehreren der vorhergehenden Ansprüche, dadurch gekennzeichnet, daß
die Kopfstücke (21, 22) an ihrer das Oberende des
Gabelkopfes (20) bildenden Stirnfläche einen Lageransatz (35) für ein in horizontaler Ebene um den
Befestigungszapfen (30) drehbares Abweisrad (36)
aufweisen.

6.) Laufrolle nach Anspruch 5, dadurch gekennzeichnet,
daß der Lageransatz (35) als Rastring ausgebildet
ist.

7.) Laufrolle nach Anspruch 5, dadurch gekennzeichnet,
daß das Abweisrad (36) einen den oberen Bereich
des Gabelkopfes (20) übergreifenden Hohlraum (37)
aufweist.

*FIG.1*

10

31
11

12

12

Alb. Schulte, Söhne

FIG. 2

FIG. 3

FIG. 4

0242756

2/3

Alb. Schulte , Söhne

FIG. 5

Alb. SCHULTE, Söhne